# EUROPEAN PATENT SPECIFICATION

(11) **EP 2 280 203 B1**
(45) Date of publication and mention of the grant of the patent: **12.12.2012**
(21) Application number: 10162626.5
(22) Date of filing: 12.05.2010
(51) Int. Cl.: F16K 5/04, F16K 37/00

(54) **Sanitary rotary valve**
Sanitäre Drehklappe
Valve rotative sanitaire

(30) Priority: 30.07.2009 JP 2009177278
(43) Date of publication of application: 02.02.2011
(73) Proprietor: Okabe, Shuichi, Saitama-ken (JP)
(72) Inventor: Okabe, Shuichi, Saitama-ken (JP)
(74) Representative: Hano, Christian

(56) References cited:
- DE-A1-102006 036 776
- GB-A- 1 223 345
- US-A- 3 206 254
- US-A- 4 807 203

## Description

The present invention relates to a sanitary rotary valve for a discharging system for discharging powder or particles received from hoppers or other upstream equipments to outside or downstream equipments.

This device is used to discharge powder or particles quantitatively.

Further, this device has the function to reduce the gas flow through this device. Usually there is differential pressure between the upper side and the lower side of this device because powder is transported by the gas flow.

The powder or particles related to these devices are food or medicine taken by humans or animals, or other substances which require that there is no contamination. And in case that different kinds of powder or particles are treated in the same process line, this device is used to prevent mixing of different kinds of powder or particles.

The inside of these devices is to be cleaned as regular maintenance to prevent contamination by rotten powder or particles of food or medicine, or to prevent mixing of different kinds of powder or particles.

### Description of the Related Art

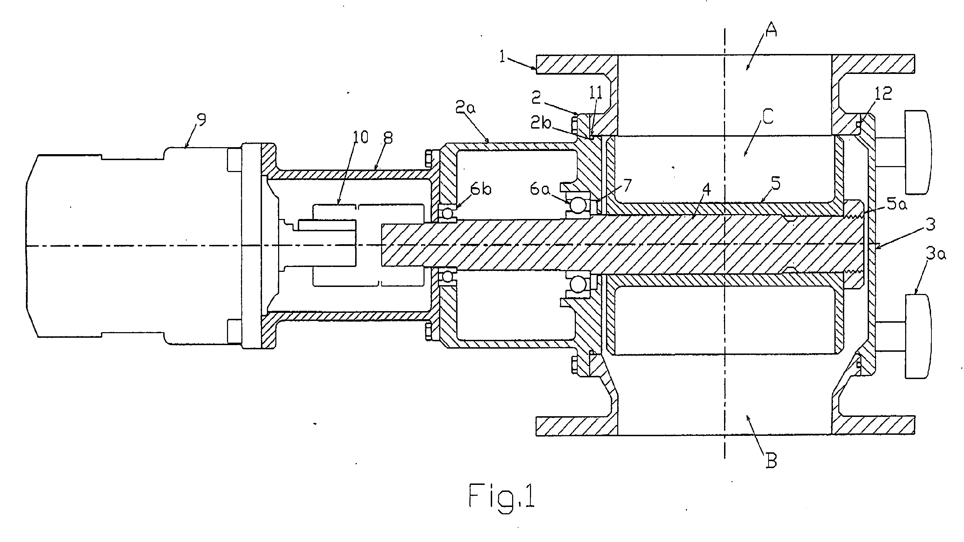

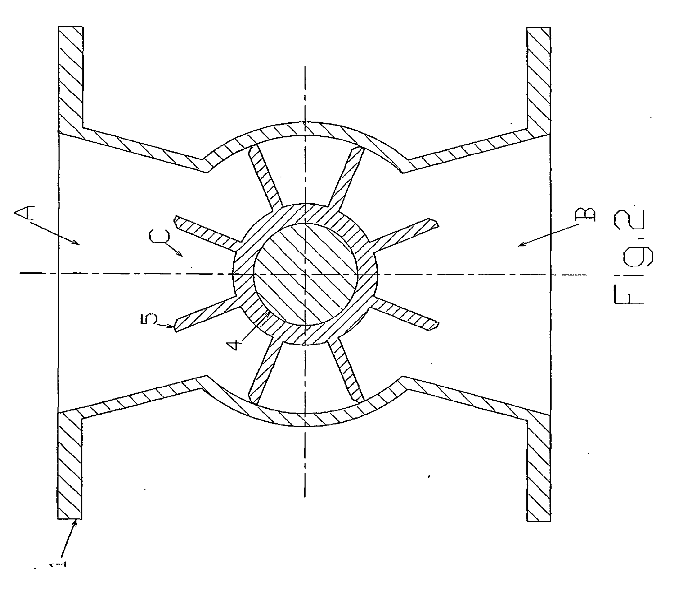

A conventionally used sanitary rotary valve for a powder discharging system, is shown in Fig. 1 and Fig.2. Fig.1 shows a sectional view and Fig. 2 is a sectional view from the right angle of Fig.1, illustrating
- a casing 1: having a horizontal hole, an upper opening A and a lower opening B, and
- a side plate 2: having a center hole, and a box 2a on the outside surface, and
- a door 3: provided on the opposite side of side plate 2, detachably fixed to casing 1 by knobs 3a, and
- a shaft 4: passing through the center hole of side plate 2, and
- a rotor 5: having pockets C, and detachably fixed to shaft 4, and
- ball bearings 6a, 6b: between side plate 2 and shaft 4, and
- a seal packing 7: between side plate 2 and shaft 4, and
- a motor mount 8: fixed to box 2a of side plate 2 by bolts, and
- a geared motor 9: fixed to motor mount 8 by bolts, and
- a coupling 10: connecting shaft 4 and geared motor 9, and
- an O-ring 11: between casing 1 and side plate 2, and
- an O-ring 12: between casing 1 and door 3.

Usually, flanges are provided on the upper side and the lower side of this device to be connected with other equipments or pipe lines.

The torque of geared motor 9 is translated to shaft 4 by coupling 10. One end of shaft 4 and one end of rotor 5 have hexagonal shape or key to fit each other, and to translate rotating torque. Rotor 5 is fixed by a detachable screw nut 5a.

To reduce the gas flow through this device caused by the differential pressure between the upper side and the lower side of this device, the clearance between casing 1 and rotor 5 is required to be narrow, such as 0.2 mm.

Casing 1 is sealed by seal packing 7, O-ring 11 and O-ring 12 to prevent leakage of inner gas and powder.

Powder or particles are dropped into pockets C through opening A by gravity, and turned by rotor 5, and discharged from pockets C through opening B by gravity.

The constant rotating speed of the geared motor 9 makes the discharged amount of powder or particles constant.

During the regular cleaning of the inside, door 3 is opened, and screw nut 5a is removed, and rotor 5 is extracted to the outside. Thereafter, the inside of casing 1 and side plate 2, and rotor 5 is cleaned. After cleaning them, the rotor 5 is inserted into casing 1 and fixed to shaft 4, screw nut 5a is tightened, door 3 is closed, and the operation is restarted.

Document GB 1223 345 discloses a similar Rotary valve.

However, there are two problems as for the conventional sanitary rotary valve.

### 1) The risk of contamination

Shaft 4 is supported as a cantilever. Because of this, if the journal for supporting shaft 4 is provided also on the door 3, a lot of work is necessary to disassemble the shaft 4 from the journal of door 3 each time of the regular cleaning maintenance.

However, this cantilever supporting of shaft 4 causes deflection of shaft 4 due to wear of ball bearings 6a, 6b, and/or force onto rotor 5 caused by an irregular differential pressure between the upper and lower sides of this device.

Further, in case of an irregular temperature rise of the powder or particles, the temperature of rotor 5 is also increased, but the temperature of casing 1 is less than that of rotor 5 because casing 1 is cooled by the outer atmosphere. The diameter of rotor 5 is increased by thermal expansion, but the inside diameter of the horizontal hole is not so expanded. Then, rotor 5 touches casing 1.

Once rotor 5 touches the inner surface of casing 1, the surfaces of casing 1 and rotor 5 are grinded by abrasion, and small particles of metal are mixed into the processed powder. Actually it is very difficult to detect the happening of this accident. If the operation is continued without noticing this accident, high costs occur for recalling the contaminated powder and the social responsibility to keep safety of food or medicine is impeached severely.

### 2) The difficulty of cleaning

The part of side plate 2 inserted into casing 1, and the groove 2b for O ring 11 have space whereto powder invades and rots. If the inner pressure in casing 1 is suddenly lowered, rotten powder comes out from this space with the gas stream, and is mixed with the powder of products. According to the standard for "Commercial powdered production equipment NSF/ANSI 8", spaces such as the inserted part and groove 2b are to be cleaned regularly by disassembling the device.

However, casing 1 and side plate 2 are connected with bolts, and tools are necessary to disassemble them. And, there is no supporting device for hanging the side plate 2, the motor mount 8 and the geared motor 9. This makes it difficult to do cleaning work as regular maintenance.

Furthermore, once side plate 2 is disassembled, the position of side plate 2 is changed from the initially set position. A certain clearance between side plate 2 and casing 1 such as 0.1 mm is necessary for easy disassembling, and this amount of clearance is not negligibly small compared with the clearance of 0.2 mm between side plate 2 and casing 1.

Therefore, it is difficult to disassemble side plate 2 for regular cleaning work.

### SUMMARY OF THE INVENTION

The object of the present invention is to provide a sanitary rotary valve that can solve the essential problems of the conventional sanitary rotary valve for powder discharging systems as described above.

This object is achieved by a sanitary rotational valve comprising the features of claim 1. Preferred embodiments are claimed in claims 2 to 5.

The present invention is a sanitary rotary valve which prevents the accident of touching between casing and rotor, and the contamination of powder products, and high costs for recalling the powder products.

Furthermore, the present invention solves the problem of cleaning the part of the side plate which is inserted into the side plate.

### BRIEF DESCRIPTION OF THE DRAWINGS

Fig. 3 shows the main parts and layout a sanitary rotary valve of the present invention,
Fig. 4 shows the condition that a side plate 2 is disassembled and extracted
   and
Fig. 5 shows a further view of the side plate, illustrating in particular how the side plate is supported by set bolts.

The main illustrated parts are:
- a casing 1: having a horizontal hole, an upper opening A and a lower open- ing B, and,
- a side plate 2: having a center hole and a cylinder 2a extended towards the in- side, and
- a door 3: provided on the opposite side of the side plate 2 and detachably fixed to casing 1 by knobs 3a, and
- a shaft 4: passing through the center hole of side plate 2, and
- a rotor 5: having pockets C and detachably fixed to shaft 4, and
- ball bearings 6a, 6b: between side plate 2 and shaft 4, and
- a seal packing 7: between side plate 2 and shaft 4, and
- a motor mount 8: fixed to the outside of side plate 2 by bolts, and
- a geared motor 9: fixed to motor mount 8 by bolts, and
- a coupling 10: connecting shaft 4 and geared motor 9, and
- an O-ring 11: between casing 1 and side plate 2, and
- an O-ring 12: between casing 1 and door 3.

The torque of the geared motor 9 is translated to the shaft 4 by the coupling 9. One end of the shaft 4 and one end of the rotor 5 have hexagonal shape or key to translate rotating torque. The rotor 5 is fixed by a detachable screw nut 5a.

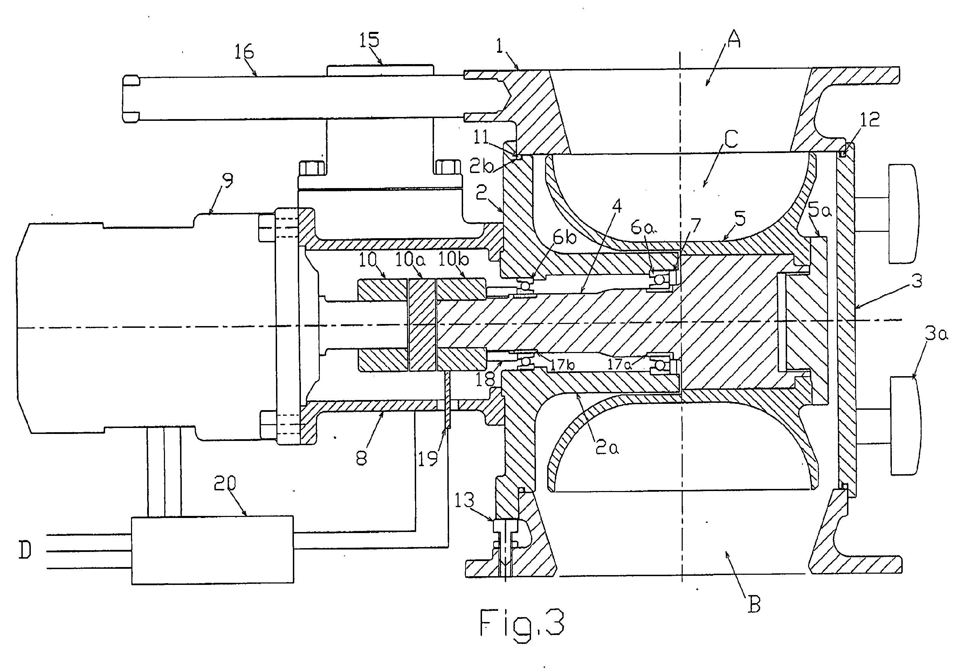

As features of the present invention, Fig. 3 shows the particular parts illustrating
- a cylinder 2a of side plate 2: having length up to the center of rotor 5, and
- a set bolt 13: supporting side plate 2 vertically, screwed in the lower flange of casing 1, and
- two set bolts 14: supporting the side plate horizontally, screwed in the flange of side plate 2, and
- a hanger 15: hanging motor mount 8, and
- a rod 16: supporting hanger 15, fixed at the edge of the up- per flange of casing 1, and
- electrical insulating bushes 17a, 17b: between shaft 4 and ball bearings 6a, 6b, and
- ball bearings 6a,6b: of angular type, and
- a screw nut 18: keeping full contact of angular ball bearings 6a, 6b and
- a middle piece 10a: made of electrically insulating material, and
- both side pieces 10b: made of metal, of coupling 9, and
- an electrical contact 19: touching the coupling 10b, and
- an electrical alarm system 20: receiving electrical power supply from electrical power source D and feeding power to geared mo- tor 9, and connected with electrical contact 19 and earth.

### DETAILED DESCRIPTION OF THE PREFFERRED EMBODIMENT

In order to attain the first object of preventing the accident of touching between casing 1 and rotor 5 and contamination of powder products, there is provided a long cylinder 2a of side plate 2, and an angular bearing 6a is located near the center of rotor 5. The active point of the force caused by the differential pressure between the upper and lower sides of rotor 5 on to rotor 5 is near the angular bearing 6a, such that the bending moment for rotating shaft 4 is small.

Instead of the shaft 4, this bending moment is endured by the cylinder 2a. The cylinder 2a is much stronger to bear the bending moment than the shaft 4.

Angular type ball bearings 6a, 6b are used, and screw nut 18 keeps full contact of the bearings without inner clearance of bearing. So, total displacement and inclination of shaft 4 and rotor 5 is small.

Another aspect to prevent contamination is an electrical alarm system for detecting touch between the casing 1 and the rotor 5. The rotor 5 and the shaft 4 are electrically isolated from the casing 1 and the side plate 2 by electrically insulating bushes 17a, 17b and electrically insulating middle piece 10a of coupling 10, but electrically connected with contact 19 only. The electrical alarm system 20 supplies small voltage such as 12V between contact 15 and earth. Once rotor 5 touches casing 1, an electrical current of less than 1 mA occurs, The electrical alarm system 20 picks up this current as signal, and automatically cuts off the power supply to the geared motor 9, and the alarm signal alerts the operating staff.

In this way, the accident of contact between casing 1 and rotor 5 can be perfectly detected, and the risk of contamination is eliminated. The electric current is as small as less than 1 mA such that sparks do not occur at the contact point between casing 1 and rotor 5. So there is no possibility of powder explosion.

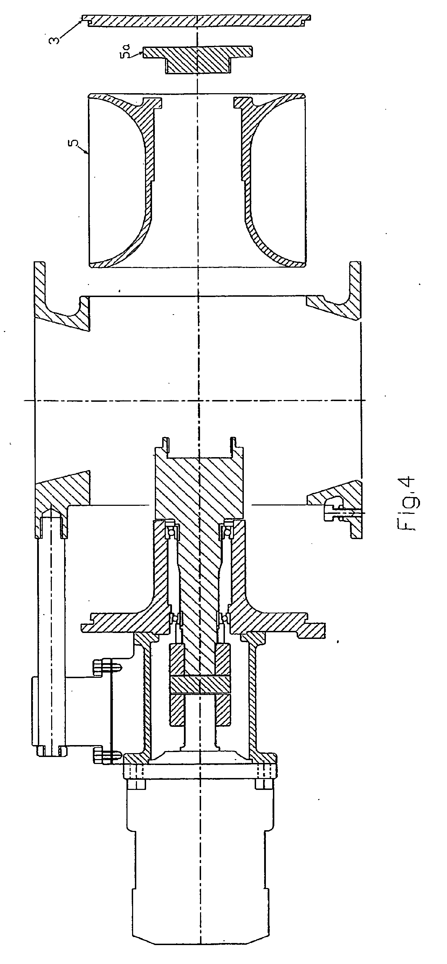

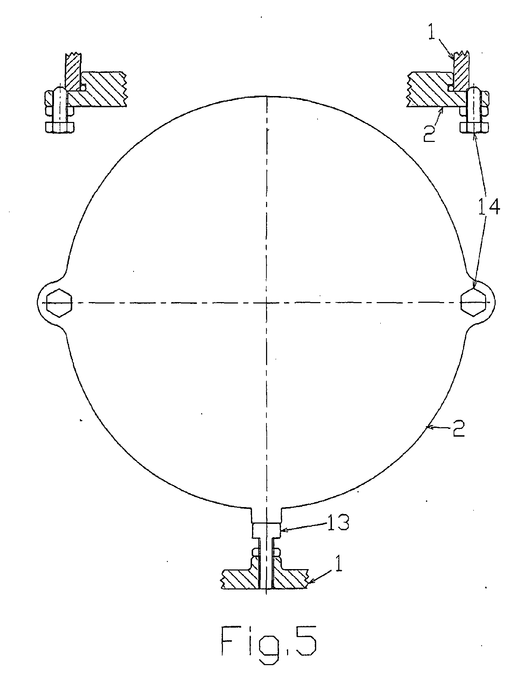

In order to attain the second object that the inserted part of side plate 2 and groove 2b for O ring 11 can be cleaned in regular maintenance as required by the standard of "Commercial powdered production equipment NSF/ANSI 8", side plate 2 can be disassembled by loosing knobs without any tools, and extracted by hanger 15 and rod 16 as shown in Fig 4. When the side plate 2 is reassembled with casing 1, the side plate 2 is supported vertically by a set bolt 13 screwed in the lower flange of casing 1, and supported horizontally by two set bolts 14 screwed in the flange of side plate 2 as shown in Fig. 5. In this way, the side plate 2 can be set at the correct position and the clearance between casing 1 and rotor 5 can be kept correctly. For the purpose of not disturbing the setting of side plate 2 into the correct position, enough clearance is provided for connecting the bolts between hanger 15 and side plate 2.

## Claims

1. Sanitary rotary valve comprising
- a casing (1),
- a side plate (2) detachably attached on one side of the casing (1),
- a shaft (4) extending through the side plate (2) into the casing (1),
- a rotor (5) being arranged on the shaft (4) within the casing (1),
- the shaft (4) being driven outside of the casing (1) by a geared motor via a coupling (10),
**characterized in that**
- the side plate (2) comprises a cylinder (2a) extending from the side plate (2) into the casing (1) coaxially to the shaft (4) up to about the middle of the axial length of the rotor (5), and
- a bearing (6a) for supporting the rotating shaft (4) is located close to the free end of cylinder (2a) between the cylinder (2a) and the shaft (4).

2. Sanitary rotary valve according to claim 1, wherein the side plate (2) is vertically and horizontally fixed to the casing (1) by set bolts (13, 14).

3. Sanitary rotary valve according to claim 1 or 2, wherein a connecting rod (16) is attached to the outer side of the casing (1) parallel to the longitudinal axis of the shaft (4), a hanger (15) is slidably guided by the connecting rod (16), and a motor mount (8) is attached to the hanger (15).

4. Sanitary rotary valve according to one of the preceding claims, wherein the shaft (4) is electrically insulated from side plate (2) by electrically insulating bushes (17a, 17b) and from the motor (9) by an electrically insulating middle element (10a) of the coupling (10), and an electrical contact touching element (10b) of the coupling (10) is attached to shaft (4), and an electrical alarm system is provided for normally receiving electrical power supply and feeding power to the motor (9), the electric alarm system detecting whether electric current flows between casing (1) and rotor (5), and cutting the power supply to the motor (9) if electric current flows between the rotor (5) and the casing (1).

5. Sanitary rotary valve according to one of the preceding claims, wherein the shaft (4) is supported by angular bearings which are held tightly by a screw nut screwed onto the shaft (4).

## Patentansprüche

1. Sanitärdrehventil umfassend
- ein Gehäuse (1),
- eine Seitenplatte (2), die an einer Seite des Gehäuses (1) lösbar befestigt ist,
- eine Welle (4), die sich durch die Seitenplatte (2) in das Gehäuse (1) erstreckt,
- einen Rotor (5), der auf der Welle (4) innerhalb des Gehäuses (1) angeordnet ist,
- wobei die Welle (4) über eine Kupplung (10) durch einen Getriebemotor außerhalb des Gehäuses (1) angetrieben wird,
**dadurch gekennzeichnet, dass**
- die Seitenplatte (2) einen Zylinder (2a) umfasst, der sich koaxial zu der Welle (4) von der Seitenplatte (2) in das Gehäuse (1) bis zu ungefähr der Mitte der axialen Länge des Rotors (5) erstreckt, und
- in der Nähe des freien Endes des Zylinders (2a) zwischen dem Zylinder (2a) und der Welle (4) ein Lager (6a) zum Lagern der Drehwelle (4) angeordnet ist.

2. Sanitärdrehventil nach Anspruch 1, wobei die Seitenplatte (2) durch Stellschrauben (13, 14) an dem Gehäuse (1) vertikal und horizontal befestigt ist.

3. Sanitärdrehventil nach Anspruch 1 oder 2, wobei an der Außenseite des Gehäuses (1) parallel zur Längsachse der Welle (4) eine Verbindungsstange (16) befestigt ist, von der Verbindungsstange (16) eine Hängevorrichtung (15) verschiebbar geführt ist und an der Hängevorrichtung (15) eine Motorhalterung (8) befestigt ist.

4. Sanitärdrehventil nach einem der vorhergehenden Ansprüche, wobei die Welle (4) durch elektrisch isolierende Buchsen (17a, 17b) gegenüber der Seitenplatte (2) und durch ein elektrisch isolierendes Mittelelement (10a) der Kupplung (10) gegenüber dem Motor (9) elektrisch isoliert ist, und ein elektrisches Kontaktberührungselement (10b) der Kupplung (10) an der Welle (4) angebracht ist, und ein elektrisches Alarmsystem vorgesehen ist, um normalerweise die Stromversorgung zu empfangen und dem Motor (9) Energie zuzuführen, wobei das elektrische Alarmsystem erfasst, ob zwischen dem Gehäuse (1) und dem Rotor (5) elektrischer Strom fließt, und die Energiezufuhr zu dem Motor (9) unterbricht, wenn zwischen dem Rotor (5) und dem Gehäuse (1) elektrischer Strom fließt.

5. Sanitärdrehventil nach einem der vorhergehenden Ansprüche, wobei die Welle (4) durch Schräglager getragen ist, die durch eine auf die Welle (4) geschraubte Schraubenmutter fest gehalten werden.

## Revendications

1. Valve rotative sanitaire comprenant
- une enveloppe (1),
- une plaque latérale (2) fixée de façon détachable sur un côté de l'enveloppe (1),
- un arbre (4) s'étendant à travers la plaque latérale (2) jusque dans l'enveloppe (1),
- un rotor (5) étant agencé sur l'arbre (4) à l'intérieur de l'enveloppe (1),
- l'arbre (4) étant entraîné à l'extérieur de l'enveloppe (1) par un moteur à engrenages par l'intermédiaire d'un accouplement (10),
**caractérisée en ce que**
- la plaque latérale (2) comprend un cylindre (2a) s'étendant de la plaque latérale (2) jusque dans l'enveloppe (1) coaxialement avec l'arbre (4) jusqu'à environ le milieu de la longueur axiale du rotor (5), et
- un palier (6a) pour supporter l'arbre (4) rotatif est situé à proximité de l'extrémité libre du cylindre (2a) entre le cylindre (2a) et l'arbre (4).

2. Valve rotative sanitaire selon la revendication 1, dans laquelle la plaque latérale (2) est fixée verticalement et horizontalement sur l'enveloppe (1) par des boulons encastrés (13, 14).

3. Valve rotative sanitaire selon la revendication 1 ou 2, dans laquelle une tige de connexion (16) est fixée sur le côté extérieur de l'enveloppe (1) parallèlement à l'axe longitudinal de l'arbre (4), un étrier (15) est guidé de façon coulissante par la tige de connexion (16), et une monture de moteur (8) est fixée à l'étrier (15).

4. Valve rotative sanitaire selon l'une des revendications précédentes, dans laquelle l'arbre (4) est électriquement isolé de la plaque latérale (2) par des garnitures d'isolation électrique (17a, 17b) et du moteur (9) par un élément médian d'isolation électrique (10a) de l'accouplement (10), et un élément (10b) de l'accouplement (10) touchant un contact électrique est fixé à l'arbre (4), et un système d'alarme électrique est prévu pour recevoir normalement une alimentation électrique et amener une alimentation jusqu'au moteur (9), le système d'alarme électrique détectant si un courant électrique passe entre l'enveloppe (1) et le rotor (5), et coupant l'alimentation électrique du moteur (9) si un courant électrique passe entre le rotor (5) et l'enveloppe (1).

5. Valve rotative sanitaire selon l'une des revendications précédentes, dans laquelle l'arbre (4) est supporté par des paliers angulaires qui sont fermement maintenus pour un écrou fileté vissé sur l'arbre (4).
